# EUROPEAN PATENT APPLICATION

(11) **EP 4 223 704 A1**
(43) Date of publication of application: **09.08.2023**
(21) Application number: 22154683.1
(22) Date of filing: 02.02.2022
(51) Int. Cl.: C02F 1/467, C02F 1/461, C09D 5/16, C09D 5/24, C09D 7/61, C09D 7/40, C02F 103/08, C02F 103/10, C02F 103/36, C02F 1/50

(54) **APPARATUS FOR CLEANING SEAWATER WITH IMPROVED ELECTROCHEMICAL CELL**

(71) Applicant: Grant Prideco, Inc., Houston, TX 77036 (US)
(72) Inventor: Ghorbaniyan, Masoud, 4031 Stavanger (NO); Espeland, Øyvind, 4319 Sandnes (NO); Huang, Fan, 4316 Sandnes (NO)
(74) Representative: Håmsø Patentbyrå AS

(57) **Abstract**

There is disclosed an apparatus (100) for cleaning seawater, the apparatus (100) is configured to be positioned below the seawater surface and to take in surrounding seawater. The apparatus (100) comprises an electrolytic cell (10) comprising an anode and a cathode, wherein the cathode comprises a base material and a coating, the coating including a hydrolysable polymer and an electrically conductive agent. In a second aspect, the invention relates to a method for cleaning seawater for an injection into an injection well by means of an apparatus (100) according to the first aspect of the invention, the method including the steps of: placing the apparatus (100) under water in a stream of water to be cleaned; supplying power to the electrolytic cell (10) in order to generate an oxidating agent; letting the oxidating agent react with biologic material in the stream of water; injecting the cleaned water into an injection well.

## Description

### TECHNICAL FIELD

The disclosure relates to an apparatus for cleaning seawater, the apparatus comprising an electrolytic cell, and to a method for cleaning seawater using the apparatus. The water may be cleaned for injection into an injection well.

### BACKGROUND

Electrochemical production of oxidants via electro chlorinators and hydroxyl radical generators is well known and widely used in the water treatment industry, where the purpose is to inactivate organics present in the water and thus provide disinfection.

A saltwater chlorinator for water treatment plants traditionally includes an electrolysis cell comprising parallel plates of anodes and cathodes. The saltwater chlorinator generates oxidants such as chlorine, which functions as a disinfecting agent. The main byproducts of any saltwater electrolysis process are generation of hydrogen gas (H₂) and precipitation of insoluble salts.

A hydroxyl radical generator is similar to an electro chlorinator, but it has different oxidation/reduction potential and materials on the cathode and anode. Oxidants such as hydroxyl radicals are extremely reactive and will be converted to another chemical molecule within nanoseconds. As such highly reactive radicals are generated at the surface of the electrodes in a hydroxyl radical generator, only water which is close to the electrodes will be treated by these radicals.

Water and oxygen reduction reactions near the cathode cause the release of oxidants and creation of an alkaline environment, while oxidation reactions at the anode cause an acidic environment. If the water contains inorganic ions such as calcium and magnesium, for example as present in sea water, the alkaline environment will typically induce precipitation of these ions, for example of calcium in the form of CaCO₃ and magnesium in the form of Mg(OH)₂. Such precipitate is generally known as scale. The terms "scale", "scaling", "the build up of scale" or the "deposition of scale" are used herein to refer to the deposit of poorly soluble, mainly inorganic compounds such as, but not limited to, calcium carbonate, magnesium hydroxide and calcium sulphate. The particular compounds will depend on the mineral content of the water / aqueous solution in the particular application in which the presently described invention may find utility.

The rate of deposition and type of material deposited on the cathode will depend on the electrical current density and the temperature and chemistry of the water as well as the rate of flow of water through the cell. In the complex case of seawater electrolysis, slightly different materials may be deposited on the cathode due to different growth rates of calcium or magnesium salts. This may result in different physical properties of the deposited material, e.g. different hardness, texture, or colour.

Formation of scale is a considerable challenge in the design of seawater chlorinators where precipitation due to chemical reactions forms a deposit on the cathodes of the device, and thereby creates a significant restriction or even plug. Scale growth will over time significantly reduce the cathode contact area and thereby the disinfection efficiency, and increase the pressure drop across the cell due to reduced flow area.

Different methods to deal with the problem of scale formation in addition to lifting the cell out of the water and clean it mechanically have been proposed. For example, US3822017 A discloses an electrical chlorination unit which has scrapers to mechanically remove the scale, US2015233003 AA discloses a method for decreasing the rate of formation of scale by intermittently injecting jets of pressurized water, and US2006027463 AA discloses an electrolytic cell wherein ozonated air bubbles are used to decrease the formation of scale by attracting particles of scale and transporting them away from the electrode. However, these solutions will make the electrochemical cell more complex, and thereby more expensive and prone to malfunction. US5034110 A discloses a self-cleaning chlorinator comprising a power supply which cyclically reverses the polarity at the electrodes to remove the scale deposits. A disadvantage of reversing the polarity is that the electrodes may be damaged, and their lifetime reduced. This is especially disadvantageous for subsea applications, where the installation and maintenance may be very expensive if the electrochemical cell is positioned e.g. at the seabed, which may in worst case be several hundred kilometres offshore at a depth of several kilometres below surface.

Recent attempts have also been made to coat a cathode with materials that are repellent to inorganic materials and thereby avoid scale build-up. The effect of such repellent coatings has been somewhat limited so far. These repellent coatings have usually been made from hydrophobic and oleophobic materials that are not electrically conductive and therefore had to be made very thin, typically in the sub-micrometre range, in order not to compromise the electrolytic function of the cell. It has therefore been difficult to apply a uniform, sufficiently thin coating without holes, where the holes define nucleation sites for scale build-up. To obtain some effect from such inorganic repellent coatings, it has also been necessary to reverse electrode polarity, which reduces the electrode lifetime as explained above. The inorganic repellent coatings have also shown to be dependent on a certain flow of water in order to provide some effect, meaning that it would not be efficient during a temporary stop in the flow.

In addition to the scaling problem described above, electrically conductive materials are particularly susceptible to electromechanical oxidation in reactions with an oxidant such as oxygen, generally referred to as corrosion. The problem of corrosion is accentuated in aqueous environments and in particular aqueous environments where there are free ionic species e.g. salts, which facilitate the transport of free electrons. Corrosion is accelerated when performing electrolysis, as the application of voltage to electrodes placed in an aqueous solution accelerates the transport of electrons and results in the reduction of chemical species at the negative electrode and oxidation of other chemical species at the positive electrode. The positive electrode will be subject to corrosion, due to the oxidative environment.

The corrosion includes chemical corrosion caused by a reaction with oxygen and electrochemical corrosion caused by a reaction with salt ions as well as by the electrochemical potential between the working electrode and the counter electrode when a current is flowing through the electrolyte.

The invention has for its object to remedy or to reduce at least one of the drawbacks of the prior art, or at least provide a useful alternative to prior art. The object is achieved through features, which are specified in the description below and in the claims that follow.

The invention is defined by the independent patent claim, while the dependent claims define advantageous embodiments of the invention.

### SUMMARY

According to a first aspect, there is provided an apparatus for cleaning seawater, the apparatus configured to be positioned below the seawater surface and to take in surrounding seawater, wherein the apparatus comprises an electrolytic cell comprising an anode and a cathode, wherein the cathode comprises a base material and a coating, the coating including a hydrolysable polymer and an electrically conductive agent.

The conductive agent may comprise graphene. The conductive agent may comprise carbon nanotubes.

The ratio (weight) of graphene to carbon nanotubes may be in the range 1:4 to 4:1 preferably 1:3 to 3:1 and even more preferably around 1:1.

The coating may be made from a liquid including 0.5- 10% wt% electrically conductive agent, such as the mentioned combination of graphene and carbon nanotubes, and preferably around 2.5-5 wt% electrically conductive agent, referring to the wt% of the liquid composition, including volatile components prior to curing. 2.5-5 wt% of the total liquid components correspond to about 5-10% of the total dry matter when the electrically conductive agent is the mentioned combination of graphene and carbon nanotubes

The hydrolysable polymer may include a hydrolysable acrylate.

The coating may include a surface layer and a primer layer, the primer layer being provided between the base material and the surface layer.

The primer layer and the surface layer may include the electrically conductive agent, and the surface layer includes the hydrolysable polymer.

The thickness of the coating may be in the range 50 to 200 µm, preferably in the range 50 to 150 µm. It should however be mentioned that since the coating is conductive, it may be made much thicker than the non-conductive coatings of the prior art. Each coating may be tailored with a thickness designed for a required operation lifetime, such as for 2, 4, or 6 years or even longer, without the need for replacement or maintenance and without compromising its performance, as will also be discussed below.

The electrolytic cell may be positioned at the intake of the apparatus.

The apparatus may include a container for gravitational precipitation of particles from water.

According to a second aspect, there is provided a method for cleaning seawater for injection into an injection well by means of an apparatus according to the first aspect of the invention, the method including the steps of: placing the apparatus under water in a stream of water to be cleaned; supplying power to the electrolytic cell and thereby generating oxidating agent; bringing the oxidating agent to react with biological material in the stream of water, and injecting the cleaned water into an injection well.

The method may include the steps of placing an electrolytic cell at an intake for water in the apparatus, and generating chlorine by means of the electrolytic cell.

### BRIEF DESCRIPTION OF THE DRAWINGS

In the following is described examples of preferred embodiments illustrated in the accompanying drawings, wherein:
Figure 1 shows a cross-section view of a cathode as used in an electrolytic cell;
Figure 2 shows in a perspective view an electrolytic cell;
Figure 3 shows a cross-section view of an alternative cathode used in an electrolytic cell;
Figure 4 shows an apparatus for cleaning seawater comprising an electrolytic cell;
Figure 5 shows the intake of the apparatus of Figure 4; and
Figure 6 shows an experimental set-up used for testing of electro chlorinators.

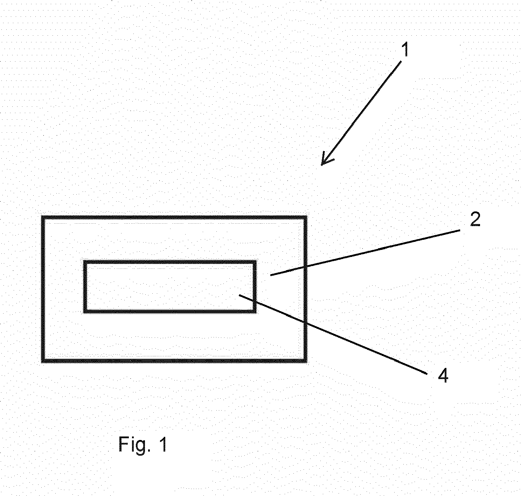

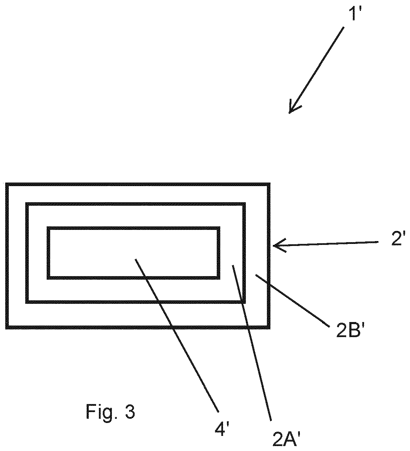

The figures are shown highly schematic and simplified, and various features therein are not necessarily drawn to correct relative size. In particular, the thickness of the coating as shown in Figs. 1 and 3 is highly exaggerated compared to the size and thickness of the rest of the cathode.

### DETAILED DESCRIPTION OF THE DRAWINGS

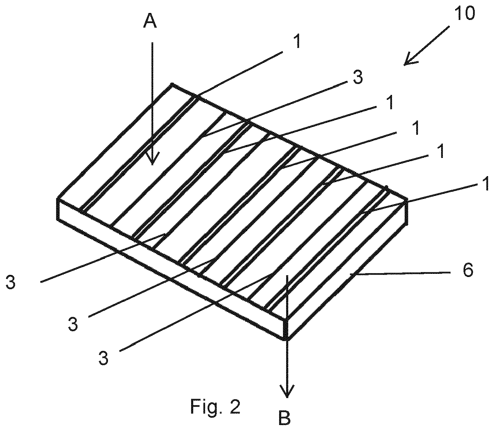

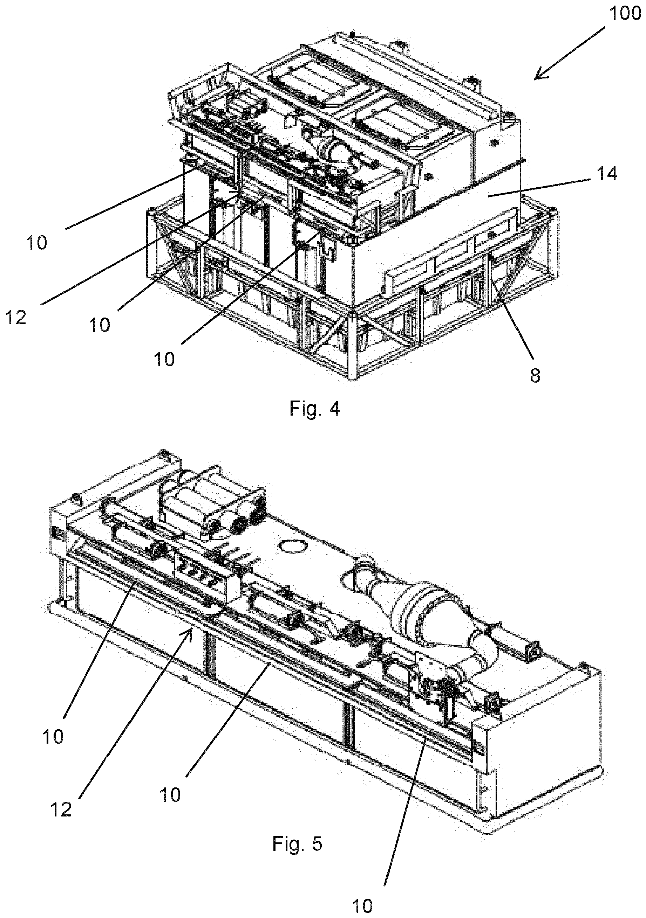

Referring firstly to Figure 1, there is provided a cathode 1 as used in an electrolytic cell 10 shown in Figure 2. Finally, an apparatus 100 comprising the electrolytic cell 10 for cleaning of seawater is shown in Figures 4 and 5 The electrolytic cell 10 may be an electro chlorinator for generating chlorine or a hydroxyl radical generator for generating free radicals. These types of electrolytic cells may be used to clean water subsea continuously for long periods of time without maintenance.

As shown in Figure 1, in a highly simplified cross-section, the cathode 1 as used in an electrolytic cell 10 comprises a base material 4, typically made from titanium or another eligible electrode material as mentioned above, and a coating 2. The coating 2 includes a hydrolysable polymer and an electrically conductive agent as will be explained in more detail later.

In the following, the term "coating" refers to a coating comprising one or two or three or more layers. The outermost layer is referred to as the "surface layer". Therefore, in some examples, there will only be a surface layer, whereas in other examples there will be a surface layer and other layers between the surface layer and the base material 4 to which the coating 2 is applied.

The term "hydrolysable" in the context of "hydrolysable polymer" means that said polymer will undergo hydrolysis when in contact with water or an aqueous environment. The term "aqueous environment" encompasses all aqueous solutions, such as seawater. The polymer undergoing hydrolysis means that water molecules will break one or more chemical bonds in said polymer, and as a result, the polymer layer will gradually degrade and expose a fresh surface. This phenomenon is also referred to as self-polishing, or ablative and sometimes called sloughing. The phenomenon will be accelerated if there is a relative movement between the material susceptible to corrosion and/or scaling, and the surrounding aqueous solution.

In use one or more such cathodes 1 will be used together with one or more anodes 3 to define an electrolytic cell 10 as indicated in Fig. 2. The cathodes 1 and anodes 3 are placed in a frame 6, forming a cassette-like structure, through which water may flow when the cell 10 is in operational use. The flow of water through the electrolytic cell 10 is indicated by arrow A showing water flowing in and arrow B showing water flowing out in Figure 2.

In order to maintain a large throughput of water, it is important that scale does not build up on the cathodes 1 as explained above. As will be understood by the skilled person, the frame 6 also includes electrical conductors (not shown) for connecting the electrodes 1, 3 to a power supply (not shown).

As shown in Figure 3, in a highly simplified cross-section, an alternative cathode 1' as used in an electrolytic cell 10 comprises a base material 4', typically made from titanium or another eligible electrode material as mentioned above, and a coating 2'. The coating 2' includes a hydrolysable polymer and an electrically conductive agent as will be explained in more detail later. The coating 2' comprises a primer 2A' and a surface layer 2B', the purpose of each will be explained later.

The hydrolysable polymer ensures that the coating 2 wears down slowly and controllably over time through a chemical reaction with seawater to maintain a fresh and scale-free surface. Said hydrolysable polymer is chosen from synthetic or naturally occurring hydrolysable polymers, and preferably chosen from polymers comprising ester and other hydrolysable bonds, such as arcylate, anhydride, acetal, ketal, or imine, in their backbone structures or in their side groups or may be chosen from polyacrylate, polyesters, polyamides, polyanhydrides, polyehters, polyurethanes, polycarbonates, and polyureas. In some examples the chosen polymer has a non-degradable backbone but degradable (i.e. hydrolysable) side groups. One example is poly(silylacrylate).

Examples of suitable hydrolysable polymers are silyl acrylate and methacrylate coatings commercially available from the companies like Jotun Group (Norway) and Comus (France). The hydrolysable polymer coatings have a self-polishing effect ensuring that any scale that attaches to the outer surface of the cathode is released/consumed together with the coating 2. The coating 2 will not be dependent on flowing water to be efficient.

An electrically conductive agent is added to the hydrolysable polymer to ensure a sufficient electric conductivity in the coating 2. The electric conductivity in the coating 2 as such, implies that a thicker coating 2 may be applied compared to the non-conductive hydrophobic and oleophobic coatings as used in the prior art.

The combined hydrolysable polymer and electrically conductive agent should preferably have a combined electrical conductivity of around 1 S/m or higher. In some examples the combined hydrolysable polymer and electrically conductive agent may provide a combined electrical conductivity of between 0.5-2 S/m. The stated combined conductivity may be the conductivity at the start, i.e. before ablation of layers of the coating 2. In this regard, the combined electrical conductivity may in some examples start with a value in a range of 0.5-2 S/m and finish, i.e. after a predetermined service life, with another combined electrical conductivity value of in the range of 0.5-2 S/m. In some examples, the coating 2 may be configured such that the electrical conductivity does not substantially change over the service life.

In some preferred examples, the electrically conductive agents are carbon-based materials such as graphene particles, carbon nanotubes, graphite, and metal particles having an average particle size of 1 nm to 500 µm. Preferably, said conductive agents are carbon-based materials including, graphite, carbon nanotubes or graphene with an average particle size from 50 nm to 50 µm.

The electrically conductive agent may in some examples comprise one or more of graphite and/or graphene and/or carbon nanotubes and/or metal and/or metal alloy particles having a size in the interval from 1 nm to 500 µm. The particles can be shaped as nanotubes, flakes, filaments, spheres, or agglomerates of such shapes. Both graphene and carbon nanotubes are known to have electrical conductivities in same range as the most conductive metals (silver and copper), while at the same time being very light. Both graphene and carbon nanotubes add mechanical strength to the coating, while carbon nanotubes also give a certain mechanical flexibility.

In a particularly preferred example, the electrically conductive agent includes a combination of graphene and carbon nanotubes, herein referred to as graphene carbon nanotubes. Carbon nanotubes connect the 2-dimensional graphene sheets to generate a highly conductive 3-dimensional network within the hydrolysable polymer even at very low concentrations. 2% graphene carbon nanotubes in a non-conductive hydrolysable polymer lead to a coating with a conductivity in the order of 1-2 S/m. Hybrid structures with graphene and carbon nanotubes are disclosed in the scientific literature, such as in "Graphene and Carbon Nanotube Hybrid Structure": A Review, Procedia IUTAM, Volume 21, Pages 94-101, 2017

In one example the coating including the graphene carbon nanotube may include 0.5 wt% to 10 wt% electrically conductive agent, such as the mentioned combination of graphene and carbon nanotubes, and preferably around 2.5-5 wt% electrically conductive agent, referring to the wt% of the liquid composition, including volatile components prior to curing. Through testing, the present applicant has found that adding 2.5-5 wt% graphene carbon nanotube to the hydrolysable polymer provides a satisfactory electrical conductivity. In comparison, silver particles, which is an alternative electrically conductive agent to be added to the polymer, had to be added in approximately twice the wt% to obtain a similar, electrical conductivity. 2.5-5 wt% of the total liquid components for combine graphene and carbon nanotubes were found to correspond to approximately 5-10 wt% of the dry matter after curing.

In one embodiment the ratio (weight) of graphene to carbon nanotube may be in the range 1:4 to 4:1, preferably 1:3 to 3:1 and even more preferably around 1:1

In any of the previously described examples, the ratio of conductive agent to the hydrolysable polymer may be in the range of 0.1% to 70% (w/w) of the total dry material of the coating 2. In any of the previously described examples, the ratio of conductive agent to the hydrolysable polymer may be in the range of 0.1% to 80% (w/w) of the total dry material of the surface layer.

Depending on the nature of the conductive agents, their concentration will be in the interval of 0.1 - 80 % per weight, preferably 5 - 70 % per weight. For metal conductive agents, the concentration (weight/weight) will be higher, mainly due to the high density of the metals compared to the low density of the polymer composition. It is contemplated that for example silver would be used in concentrations of 30 - 70 % (weight/weight). Nano carbon material having a low density can be used in correspondingly lower concentrations (weight/weight), preferably 5 - 10 %. Other low-density materials such as graphite can be used at concentrations of 10 - 30 % (weight/weight).

In some examples, the conductive agent may be composite particles, for example particles having a core consisting of one material and a coating consisting of another, different material. Such composite particles include but are not limited to graphene coated metal or non-metal particles. Metal particles may be chosen from but not limited to Zn, Fe, Al, Ni, Cu and Ag particles. Among these, Zn, Cu and Ag are preferred as they also exhibit biocidal properties.

The conductive agent may provide two functions - the aforementioned conductivity and also mechanical reinforcement of the coating. In this connection, fibrous particles may be used in the conductive agent in some examples, thereby providing reinforcement. Alternatively, particles with other morphology will strengthen the coating, for example, platelets, flakes or spheres will have a reinforcing effect.

In some examples, the thickness of the coating 2 may be in the range of 50 to 200 µm, preferably in the range 50 to 150 µm. In some examples the thickness of the coating 2 may be around 80 µm. Since the coating 2 is electrically conductive, it may be made thick enough to ensure uniform coverage while at the same time not compromising the electrolytic properties of the cell. As a non-limiting example only, the thickness of a coating 2 starting at 80 µm may be reduced by 2-3 µm after two weeks in use, and by 5-6 µm after four weeks in use, whilst the conductivity remains substantially stable during degradation.

As previously mentioned with reference to Figure 3, in some examples, the coating 2' may comprise multiple layers with the outermost layer being a surface layer 2B' which is attached to the base material 4 by a primer 2A'

In this connection, it is preferable that each of the primer layer 2A' and the surface layer 2B' include an electrically conductive agent as described above, and that the surface layer 2A' includes the hydrolysable polymer such that the surface layer 2A' will gradually degrade in use and thereby continually expose a fresh surface. The primer layer 2A' preferably comprises conductive agents at a ratio of 0.1% to 70% (w/w) of the total dry material in the primer layer 2A'.

In some examples the primer layer 2A' may comprise a polymer chosen from polyurethane, polyester, an epoxy such as polyamide, and a latex such as polyvinyl acetate latex.

Additionally, in some examples, a first tie coat (not shown) may be provided between the primer layer 2A' and the base material 4, thereby bonding the primer layer 2A' to the base material 4. Additionally or alternatively, a second tie coat (not shown) may be provided between the primer layer 2A' and the surface layer 2B', thereby bonding the primer layer 2A' to the surface layer 2B'. In examples where a primer layer 2A' is not provided, such as in the example shown in Figure 1, a tie coat (not shown) may be provided between the base material 4 and the coating 2. Where at least one tie coat is provided, the at least one tie coat preferably comprises a conductive agent at a ratio of 0.1% to 70% (w/w) of the total dry material in said at least one tie coat.

Referring again to Figure 2, the electrolytic cell 10 may be produced by treating the surfaces of the base material 4 of the cathode 1. The surfaces to be treated may preferably be dry and free of grease and/or wax. If the surfaces have scratches, rust, or corrosion, they should be cleaned or polished, before attempting to apply the coating 2. The coating 2 may not adhere properly if the surfaces being applied to are too glossy. It may therefore be useful to roughen the surfaces, such as by sand blasting, before applying the coating 2. As discussed above, it may also be preferable to add a primer layer 2B' to ensure proper binding between the coating 2 and the base material 4 of the cathode 10.

The coating 2 may be applied by spraying, wiping it onto the surfaces of the base material 4 with a lint-free cloth or dipping the surfaces into the coating material depending on specific design considerations. Additionally, the coating 2 may be applied as a paint, i.e. sprayed, rolled, curtain coated or painted on. In all cases, a substantially consistent thickness and streak-free layer may be achieved on the surfaces of the base material 4. The coating 2 typically cures very fast. This fast-curing time should preferably be taken into consideration if trying to coat multiple layers.

The coating 2, and particularly the hydrolysable polymer in the coating 2, is configured such that the coating 2 degrades in a controlled fashion in an aqueous environment. The term "controlled degradation" is used to define for example that the coating maintains substantially constant conductivity during its lifespan. Another definition of "controlled degradation" is that the coating degrades in a predictable fashion so that a layer of protective conductive coating remains also at the end of the intended duration of use.

It is within the knowledge of a person skilled in the art to devise a test for determining the degradation behaviour of coatings, where these are tested in an aqueous environment where the temperature and flow of water / circulation is controlled and preferably constant during the test.

Importantly, the conductive agents are mixed with the polymer in the coating 2 of Figure 1 or in all layers of the coating 2' of Figure 3, so that the coating 2, 2' remains electrically conductive during its lifetime, i.e. during the controlled degradation process. When the coating 2 consists of only one layer as in the example in Figure 1, the conductive agents are evenly dispersed throughout the coating, and when the coating 2' comprises two layers as in the example in Figure 3, or more layers, conductive agents are dispersed within all layers of the coating 2'. In the case of multiple layers, the conductive agents can be the same or different in the separate layers. Also, the concentration of conductive agent can be different in the separate layers.

The rate of degradation can be controlled also by purposeful adjustment of the concentration or character of the conductive agent. The concentration of the conductive agent can be the same or different between the layers. The properties of the coating 2', such as conductivity, rate of ablation, life-span and strength, to mention only some examples, can be tailored by incorporating different conductive agents in the different layers, and/or by varying the concentration of the conductive agents in different layers. This makes it possibly, for example, to ensure that the conductivity remains the same also when the thickness of the coating 2' is reduced during its use.

An anti-scaling or anti-fouling agent (not shown) may be added to any or all of the primer layer 2A', the tie coats (not shown) and the surface layer 2B'. Such an anti-scaling or anti-fouling agent may be chosen from metals, such as zinc, copper etc, or organic compounds such as biocides.

Figure 4 shows an exemplary apparatus 100 for cleaning of seawater to be injected into a not shown injection well. Several electrolytic cells 10 are provided at an intake 12 for seawater at an upper portion of the apparatus 100, as best seen in an enlarged view in Figure 5.

The apparatus 100 is placed in a base frame 8 on the seabed. In the specific embodiment, nine such electrolytic cells 10 are provided at the intake 12, though only partially visible in the drawings. From the intake 12, water flows downwardly and into a container 14 for gravitational precipitation of particles, such as disclosed in WO2007/035106A1. Connections to additional equipment, including power supply and additional cleaning steps, injection pump and the injection well as such, well are not shown in the drawings.

In one example, the apparatus 100 may be adapted to be placed on or near the seabed. By "near the seabed" is meant that in certain areas, such as in the Gulf of Mexico, seabed conditions may be muddy, and it may not be optimal to take in water immediately at the seabed. Instead, the apparatus 100 may be tethered to the seabed, floating a distance, such as 20-30 meters, above the seabed. In an alternative embodiment, the apparatus 100 may be placed on the seabed while the intake, typically via a hose, is located a distance above the seabed.

In the example shown in Figure 4 and 5, the electrolytic cells 10 are placed at the intake 12 of the apparatus 100. In some examples, the electrolytic cells 10 may be placed near the intake 12, implying that the electrolytic cells 10 act on the water upstream of other cleaning steps. Tests have shown that adding chlorine upstream of gravitational precipitation to the container 14, as described above, can have a significant positive effect of the precipitation of organic material. As such, it may be particularly preferred if the electrolytic cells 10 are placed at the intake 12 of the cells 10 for electrolytic production of chlorine.

As an alternative or addition, the electrolytic cell 10 may be placed downstream of such a container 14 for gravitational precipitation of particles. In a preferred embodiment, an electrolytic cell 10 for the production of short-lived free OH⁻ radicals may be used as a last step in the cleaning of seawater, such as immediately before injecting into an injection well.

To clean seawater, for example for injection into an injection well, the user firstly places the apparatus 100 under water in a stream of water to be cleaned (not shown). Power is then supplied to the electrolytic cells 10 of the apparatus 100, thereby generating an oxidating agent which reacts with organic material in the stream of water. The cleaned water can then be injected into an injection well.

Cleaned water is often injected into hydrocarbon reservoirs through designated injection wells to increase the production from said reservoirs, as discussed in for example the patent documents WO2004/090284A1, WO2007/073198A1, WO2007/035106A1, and WO2012026827A1. With the method presented herein, the apparatus may advantageously be placed deep in the water, where it will be able to operate for a long period of time without the need for maintenance, such as replacing or cleaning the cathodes. This will thereby be a very efficient system for injecting cleaned seawater into the reservoir.

### Comparative Example

Clean and degreased titan cathodes were coated by dipping in a the commercially available E9 Metal Ultimate coating from the E9 treatment series, as disclosed in WO 2021034201, Example 1 on the top of page 5. The coating appeared as a colourless liquid. After one dip, the thickness of the cured layer was estimated to approximately 80 - 100 nm. Four cathode samples and one anode were prepared and coated with an optimized E9 ULTIMATE coating for the testing.

The purpose of coating the anode was to investigate and evaluate the effect of the coating on the anode in an electro chlorinator cell. During the trial, two coated cathodes formed the "EC 4" test cell installed in test tank no. 4, and two coated cathodes together with the coated anode formed the "EC 5" test cell.

The coating thickness was increased by dipping the cathodes twice in the liquid coating. The resulting thickness of the cured layer was estimated to approximately 150 - 200 nm.

The E9 coating is an example of a non-conductive, thin, repellent, hydrophobic and oleophobic coating as mentioned the introductory part of description.

### Example 1. Conductivity of hydrolysable coating containing conductive elements

Samples of polymer coated titan cathodes where the coating contained graphene (G) or graphene in admixture with carbon nanotubes (CNT) were delivered by CEALTECH AS, Stavanger, Norway. The conductivity was measured using a 4-point probe device and the sheet resistance, resistivity and conductivity was recorded for all samples. The results are shown in the following table:

**Table I. Conductivity of GCNT-containing polymer coating**

| **Concentration of CNT (GCNT)** | **Conductivity** |
|---|---|
| 0.5 weight-% | 10 - 20 mS/m |
| 5 weight-% | 1 - 2 S/m |

### Example 2. Anti-scaling effect in long-term experiment

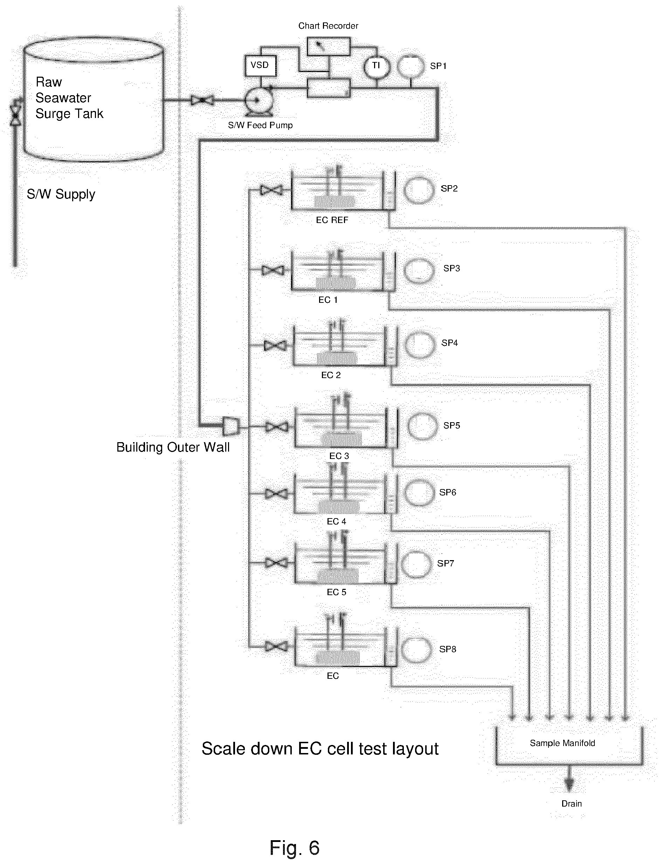

The anti-scaling effect was evaluated in an experimental set-up consisting of a tank for raw seawater, a seawater feed pump, temperature indicator, diaphragm valves for inlet flow adjustment, one electro chlorinator reference (EC) cell, five EC test cells, each cell with its power supply (1 A) and drains as shown schematically in Figure 6. North Atlantic seawater was used in the trial. The seawater is pumped through the EC cells at a flow rate of 2 - 2.5 m3/h which is estimated to correspond to a flow velocity of 0.01 m/s past the surface of the electrodes.

The test was conducted at ambient temperature, laminar flow and steady-state conditions, and by carefully adjusting the diaphragm valves, equal flow conditions were achieved for each of the EC cells. Key operating parameters were checked once a week for the duration of the trial. The main analytical parameter for the test was voltage and the measurement of total residual oxidants (TRO), and free residual oxidants by HACH DPD Method 8167.

The uncoated electrodes in the reference EC cell were used to compare the voltage, current, free/total chlorine, and scale build-up on the cathode surface with that of the EC cells with coated electrodes.

The long-term anti-scaling effect was the evaluated for the following samples:
- EC1-CTSB1: CEALTECH coating (bare polymer coating with conductive elements)^{∗}
- EC2-CTSB2: CEALTECH composite coating with lower conductivity (10 - 20 mS/m)
- EC3-CTSB3: CEALTECH composite coating with higher conductivity (1- 2 S/m)
- EC4: E9 ULTIMATE coating- only cathodes
- EC5: E9 ULTIMATE coating- both anode and cathodes
- EC6: Reference cell

1) The first samples (EC1-CTSB1) delaminated after about 24 h which was taken as a sign of weak bonding between the coating and the cathode substrate. CEALTECH delivered two titan cathodes were sandblasted and then coated in two layers, a primer and top coat, each layer comprising a polymer and conductive elements (GCNT) provided by CEALTECH AS. For sample No. 1, the primer layer had a thickness of 100 µm and the top coat a thickness of 10 µm. For sample No. 2, the corresponding values were 120 µm and 15 µm respectively. The conductivity of the cured coating was measured and found to be in average 500 mS/m.

After a test duration of 50 days, it could be seen that the EC4 and EC5 E9 ULTIMATE coating reduced the scale build-up by 30 - 40 % compared to the reference cell. It was concluded that the effect of the thickness of this coating on the build-up of scale was negligible. However, in order to achieve the objective of minimum 4-year maintenance intervals for the electro chlorinator, a reduction of 30 - 40 % may not be sufficient. The E9 ULTIMATE coating may therefore in certain embodiments be used together with regular polarity reversal. The results are shown in Table II below:

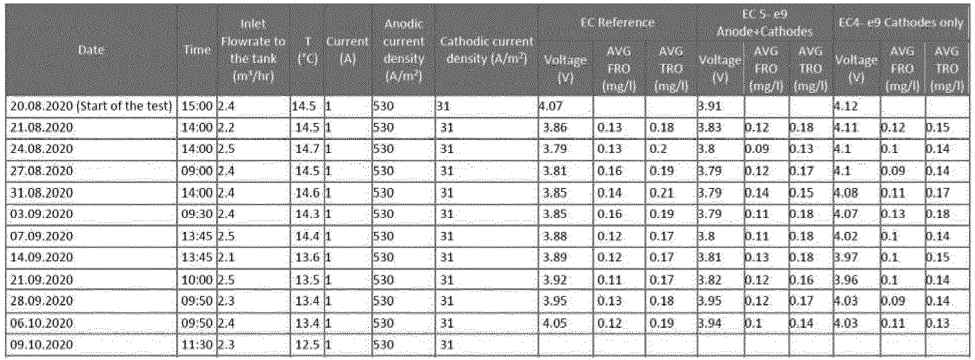

The samples EC2-CTSB2 and EC3-CTSB3 however performed so well, that their test period was extended to 90 days. After interruption of the trial, it could be seen that the only formation of scale was around uncoated connection points and uncoated wires. The was no formation of scale on the coated electrodes. The voltage level of the sample was however higher compared to the EC reference and the E9 ULTIMATE samples, but still within acceptable levels for a power supply unit intended for use in full-scale electro chlorinators. In terms of chlorine generation, the results of chlorine measurement are comparable with those of the reference cell, so the conclusion was that this coating has no or only negligible effect on the electrolysis. The results are shown in Table III below:

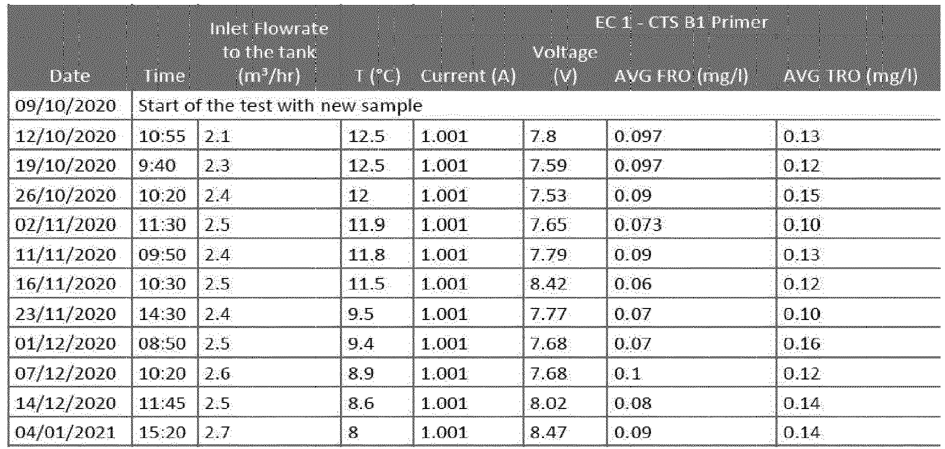

The results of the 90-day test indicates that the tested polymer containing GCNT as conductive elements is capable of completely preventing the formation of scale on the electrodes.

It should be noted that the above-mentioned embodiments illustrate rather than limit the invention, and that those skilled in the art will be able to design many alternative embodiments without departing from the scope of the appended claims. In the claims, any reference signs placed between parentheses shall not be construed as limiting the claim. Use of the verb "comprise" and its conjugations does not exclude the presence of elements or steps other than those stated in a claim. The article "a" or "an" preceding an element does not exclude the presence of a plurality of such elements.

The mere fact that certain measures are recited in mutually different dependent claims does not indicate that a combination of these measures cannot be used to advantage.

## Claims

1. An apparatus for cleaning seawater, the apparatus configured to be positioned below the seawater surface and to take in surrounding seawater, wherein the apparatus comprises an electrolytic cell comprising an anode and a cathode,
wherein the cathode comprises a base material and a coating, the coating including a hydrolysable polymer and an electrically conductive agent

2. The apparatus according to claim 1, wherein the conductive agent comprises graphene.

3. The apparatus according to claim 1 or 2, wherein the conductive agent comprises carbon nanotubes.

4. The apparatus according to claim 3 as dependent on claim 2, wherein the coating is made from a liquid composition including 0.5 wt% to 10 wt% electrically conductive agent, and preferably 2.5 wt% to 5% electrically conductive agent.

5. The apparatus according to claim 4, wherein the ratio of graphene to carbon nanotubes is in the range 1:4 to 4:1, preferably 1:3 to 3:1 and even more preferably around 1:1.

6. The apparatus according to any one of the preceding claims, wherein the hydrolysable polymer includes a hydrolysable acrylate.

7. The apparatus according to any one of the preceding claims, where in the coating includes a surface layer and a primer layer, the primer layer being provided between the base material and the surface layer.

8. The apparatus according to any one of the preceding claims, wherein the thickness of the coating is in the range 50 to 200 µm, preferably in the range 100 to 150 µm..

9. The apparatus according to claim 7 or 8, wherein each of the primer layer and the surface layer includes the electrically conductive agent and where the surface layer includes the hydrolysable polymer.

10. An apparatus according to any one of the preceding claims, where in the electrolytic cell is positioned at the intake of the apparatus.

11. An apparatus according to any one of the preceding claims, wherein the apparatus includes a container for gravitational precipitation particles from water.

12. An apparatus according to any one of the preceding claims, wherein the apparatus is adapted to generate an oxidating agent such as chlorine or free hydroxyl radicals.

13. A method for cleaning seawater for an injection into an injection well by means of an apparatus according to any of the preceding claims, the method including the steps of:
- placing the apparatus under water in a stream of water to be cleaned;
- supplying power to the electrolytic cell and thereby;
- generating an oxidating agent;
- bringing the oxidating agent to react with biological material in the stream of water;
- injecting the cleaned water into an injection well.

14. A method according to claim 13, wherein the method includes the steps of:
- placing electrolytic cell at an intake for water in the apparatus; and
- generating chlorine by means of the electrolytic cell.

15. A method according to claim 13 or 14, wherein the method includes the step of generating free hydroxyl radicals by mean of the electrolytic cell.
